# FASCICULE DE BREVET EUROPEEN

(11) **EP 0 505 848 B1**
(45) Date de publication et mention de la délivrance du brevet: **30.08.1995**
(21) Numéro de dépôt: 92104360.0
(22) Date de dépôt: 13.03.1992
(51) Int. Cl.: G04C 3/12, H01L 41/09

(54) **Moteur piézo-électrique, notamment pour pièce d'horlogerie**
Piezoelektrischer Motor, insbesondere für Zeitmessgerät
Piezo-electric motor, in particular for timepiece

(30) Priorité: 28.03.1991 CH 949/91
(43) Date de publication de la demande: 30.09.1992
(73) Titulaire: Eta SA Fabriques d'Ebauches, 2540 Granges (CH)
(72) Inventeur: Péclat, Christian, CH-2540 Granges (CH); Wind Hans, Maarten, CH-1260 Nyon (CH)
(74) Mandataire: Caron, Gérard

(56) Documents cités:
- GB-A- 2 044 014
- US-A- 3 595 007
- PATENT ABSTRACTS OF JAPAN, vol. 012, no. 370 (P-767), 5 octobre 1988; & JP-A-63 120 277
- TECHNO JAPAN, vol. 19, no. 5, mai 1986, pages 67-69; "New-type ultrasonic motor"

## Description

La présente invention est relative aux moteurs dans lesquels un mouvement de rotation est engendré au moyen de l'effet piézo-électrique ultra-sonore. Plus précisément, l'invention concerne les micromoteurs de type piézo-électrique comprenant deux éléments destinés à effectuer un mouvement relatif l'un par rapport à l'autre et formant respectivement un stator et un rotor du moteur, lesdits éléments présentant chacun une surface active qui,au cours dudit mouvement relatif, est placée en regard de la surface active de l'autre élément, l'un de ces éléments étant pourvu de moyens piézo-électriques destinés à engendrer dans cet élément des ondes vibratoires capables d'imprimer à des points de la surface active de cet élément des mouvements elliptiques, ces points en s'appuyant sur la surface active de l'autre élément, provoquant ledit mouvement relatif.

Un tel moteur est décrit dans un article paru dans la revue "Techno Japan" Vol. 19-No.5,Mai 1986. Ce moteur comporte un stator en forme générale de disque et composé de deux éléments plats accolés, l'un en acier inoxydable et l'autre en matière piézo-électrique. Sur la face apparente de l'élément en acier inoxydable est disposée en anneau , une série de petits blocs séparés les uns des autres et de façon concentrique à l'axe du disque statorique. Le rotor de ce moteur présente également la forme d'un disque qui est monté rotatif coaxialement au stator de manière que l'une de ses faces repose sur la face libre des blocs du stator. Ce rotor, qui est réalisé en acier inoxydable également, comporte dans la zone faisant face aux blocs du stator une bague en une matière plastique offrant un coëfficient de frottement élevé.

Lorsque l'élément piézo-électrique du stator est excité, il se produit dans les blocs du stator une onde progressive qui se propage circulairement le long des blocs ,de sorte que chacun des points des blocs faisant face au rotor effectue un très faible mouvement axial combiné à un mouvement annulaire selon un mouvement composite elliptique qui, appliqué à la bague de friction du rotor, fait avancer celui en rotation autour de l'axe du moteur.

Etant donné que l'amplitude du mouvement des points des blocs du stator est extrêmement faible ,il convient pour qu'une puissance perceptible puisse être prélevée sur l'axe du rotor, que cette amplitude soit supérieure aux irrégularités de la surface des blocs qui est en regard du rotor. Or, cette amplitude est de l'ordre du micron ou de quelques microns, si bien qu'il faut usiner ces surfaces avec une précision extrême.

Un autre inconvénient de ce moteur est qu'il faut nécessairement utiliser deux paires d'électrodes d'excitations de l'élément piézo-électrique, alimentées par des tensions électriques déphasées sans quoi il n'est pas possible d'engendrer une onde progressive dans le stator. Cette exigence complique le circuit d'alimentation du moteur et en augmente ainsi le coût.

Enfin, le moteur connu n'est pas très bien adapté à la transmission de couples de faible valeur, comme cela serait souhaitable dans les applications horlogères par exemple, car dans ces conditions, leur rendement est médiocre.

Une autre construction d'un micromoteur piézo-électrique est décrite dans la revue IEEE, 1989, pages 735 à 738 par T.Takano, Y. Tomikawa, T. Ogosawara et H. Hirata. L'article en question intitulé "Construction and characteristics of ultra-sonic motors using piezo-ceramic annular plates " décrit un moteur comportant un premier élément présentant une forme générale plane et associé à des moyens destinés à y engendrer des ondes vibratoires à fréquence ultrasonore permettant d'imprimer en des points périphériques actifs de cet élément des mouvements elliptiques dans son plan.

Chaque point actif est en prise avec une surface de transmission de mouvement d'un second élément de forme annulaire placé autour du premier élément, pour, en vertu du mouvement elliptique, provoquer un mouvement relatif du second élément par rapport au premier élément.

Cette construction connue, bien qu'elle soit capable de transmettre une puissance supérieure à celle qu'il est possible de transmettre dans la construction discutée ci-dessus, présente également l'inconvénient de nécessiter une précision extrême de la surface extérieure de l'élément vibrant et du profil de la surface active de l'élément annulaire, les deux éléments devant être ajustés de manière qu'il n'existe pratiquement aucun jeu entre les deux, tout en permettant néanmoins un mouvement relatif entre eux.

Par ailleurs, ces moteurs ont les mêmes inconvénients que le moteur de la technique antérieure discuté ci-dessus, à savoir qu'ils nécessitent une tension d'alimentation biphasée et présentent un faible rendement lorsqu'ils sont conçus pour la transmission de couples faibles.

L'invention a pour but de fournir un moteur piézo-électrique du type général décrit ci-dessus, mais dépourvu des inconvénients précités.

L'invention a donc pour objet un moteur du type piézo-électrique comprenant deux éléments destinés à effectuer un mouvement relatif l'un par rapport à l'autre et formant respectivement un stator et un rotor, un premier de ces éléments présentant une forme générale plane et comprenant des moyens pour y engendrer des ondes vibratoires à fréquence ultra-sonore permettant d'imprimer à au moins un point actif de sa périphérie un mouvement elliptique dans le plan de ce premier élément, ledit point actif étant en prise avec une surface de transmission de mouvement du second élément pour, en vertu dudit mouvement elliptique, provoquer un mouvement relatif dudit second élément par rapport audit premier élément, caractérisé en ce que ledit premier élément comporte une partie centrale de forme générale circulaire, à l'une des faces de laquelle sont accolés lesdits moyens pour engendrer des ondes vibratoires, partie centrale dont s'étendent au moins deux lobes sur les bords desquels sont ménagés lesdits points actifs, et en ce que les bords latéraux desdits lobes sont profilés de manière à concentrer dans lesdits points actifs l'énergie vibratoire émanant de ladite partie centrale.

Grâce à ces caractéristiques, la fabrication du moteur est considérablement simplifiée, puisqu'il suffit désormais d'assurer la précision dimensionnelle du premier élément seulement au niveau des points actifs, tandis que par un profil approprié des lobes de cet élément, l'énergie peut être concentrée adéquatement dans ces points. La transmission de l'énergie vibratoire du premier élément au second élément est alors nettement meilleure que dans le cas de la technique antérieure, le couple utile du moteur en étant augmenté d'autant.

D'autres caractéristiques et avantages de l'invention apparaîtront au cours de la description qui va suivre, donnée uniquement à titre d'exemple et faite en se référant aux dessins annexés sur lesquels:
- la figure 1 représente une vue en élévation, moitié en coupe et moitié en vue extérieure, d'un premier mode de réalisation d'un moteur piézo-électrique suivant l'invention;
- la figure 2 une vue en plan de ce moteur dont on a ôté la plaque de couverture munie de son pignon de sortie;
- la figure 3 représente par une vue en élévation, moitié en coupe et moitié en vue extérieure, un second mode de réalisation du moteur piézo-électrique suivant l'invention;
- la figure 4 représente schématiquement le trajet des ondes vibratoires se propageant dans le stator des moteurs représentés sur les figures 1 à 3;
- la figure 5 représente une vue partielle schématique de l'extrémité active de l'un des lobes du premier élément et plus précisément du tracé du mouvement qu'exécute la pointe active de ce lobe au cours de chaque cycle de fonctionnement du moteur,et
- la figure 6 représente schématiquement un troisième mode de réalisation de l'invention.

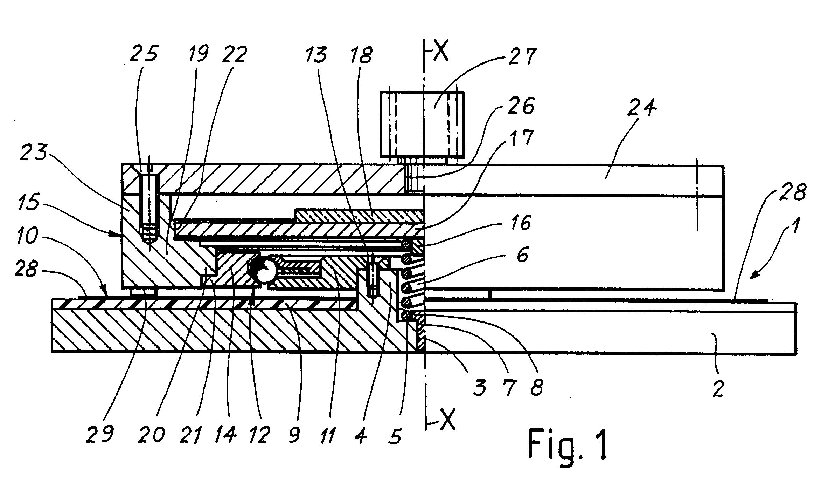

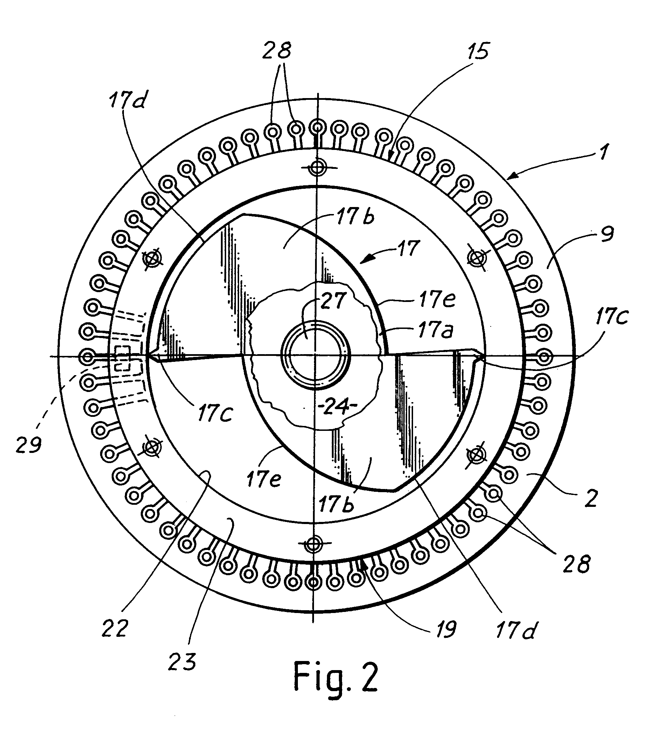

On va se référer tout d'abord aux figures 1 et 2 qui représentent un premier mode de réalisation du moteur piézo-électrique suivant l'invention.

Ce moteur comprend un stator 1 qui comprend une plaque de base 2 de forme générale circulaire d'axe X-X, et percée en son centre par un trou 3. La plaque de base 2 présente une nervure annulaire centrale 4 délimitant une cavité 5, de forme cylindrique, destinée à recevoir un ressort hélicoïdal 6. Ce dernier est maintenu fixe par rapport à la plaque de base 2 au moyen d'un bouchon 7 enfoncé dans le trou central 3 et présentant une collerette 8 autour de laquelle est serrée l'extrémité correspondante du ressort 6.

La surface de la plaque de base 2 sur laquelle se dresse la nervure centrale 4 est revêtue d'un matériau isolant 9 sur lequel est imprimé un circuit électrique 10 dont le but apparaîtra par la suite.

Une bague 11 qui constitue la bague interne d'un roulement à billes 12 est fixée sur la nervure centrale 4 au moyen de vis de fixation 13. Le roulement 12 comporte également une bague extérieure 14 fixée au rotor 15 du moteur.

Le ressort hélicoïdal 6 appartenant au stator dépasse axialement la nervure centrale annulaire 4 et reçoit, à son extrémité libre, une pièce de fixation 16 qui y est serrée en vertu de la raideur du ressort 6. La pièce de fixation 16 est soudée à une plaque de résonance 17, de forme générale plane, s'étendant radialement par rapport à l'axe X-X du moteur .

Sur la face de cette plaque de résonance 17 opposée à la pièce de fixation 16 est collé un élément piézo-électrique céramique 18 de forme circulaire et centré sur l'axe X-X.

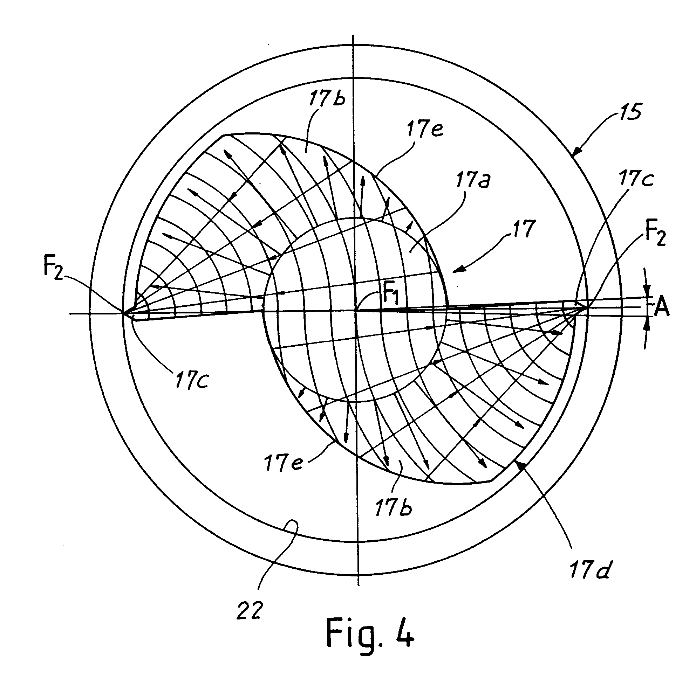

Sur les figures 2 et 4, on voit que la plaque de résonance 17 comporte une partie centrale 17a, d'où s'étendent radialement vers l'extérieur deux lobes 17b qui se terminent chacun par une pointe active 17c.

Chaque lobe 17b est délimité par un bord circulaire 17d qui suit le périmètre interne du rotor 15 à une distance radiale constante et par un bord de forme elliptique 17e dont les deux foyers F1 et F2 sont situés respectivement au centre de la plaque 17 et au sommet de la pointe 17c (figure 4).

Le rotor 15 comprend essentiellement un anneau 19 extérieur dont la surface interne annulaire est étagée. Du côté de la plaque de base 2, cet anneau présente ainsi une portée radiale annulaire 20 formant épaulement axial contre lequel vient s'appuyer une collerette extérieure 21 de la bague extérieure 14 du roulement à billes 12. L'anneau présente encore une portée axiale annulaire 22 qui forme la surface de transmission de mouvement du rotor 15 coopérant avec les pointes actives 17c du stator 1.

Le diamètre de la portée annulaire 22 ou surface de transmission de mouvement, est exactement ajustée à la distance séparant les sommets des pointes actives 17c. On notera que cette distance peut être facilement ajustée avec précision en travaillant convenablement les sommets des pointes 17c. Il en résulte donc à ce niveau une fabrication commode du moteur suivant l'invention, contrairement à celle des moteurs de la technique antérieure.

L'anneau 19 du rotor comprend encore un rebord annulaire 23 dont la surface radiale d'extrémité sert de surface d'appui à une plaque de couverture 24 rapportée sur l'anneau 19 par des vis 25.

Au centre de la plaque de couverture 24 est prévue une ouverture 26 dans laquelle est chassé un pignon 27 qui est destiné à assurer la transmission du couple de sortie du moteur.

La figure 2 montre que le circuit imprimé 10 présente un certain nombre de contacts 28 s'étendant radialement vers l'extérieur et coopérant avec un contact frotteur 29 prévu à la surface du rotor tournée vers le circuit imprimé 10. Cet agencement permet, moyennant un circuit d'alimentation approprié connecté à la plaque piézo-électrique 18, d'obtenir un fonctionnement pas-à-pas du moteur, l'arrêt en étant provoqué chaque fois que le contact frotteur se déplace d'un contact radial 28 vers l'autre. Si le moteur est destiné à être utilisé dans une pièce d'horlogerie, ce qui est l'une de ses applications préférées, le nombre des contacts radiaux est avantageusement égal à 60. Toutefois, le moteur peut également être utilisé en mode continu, cas dans lequel le circuit imprimé et son contact frotteur associé peuvent être omis.

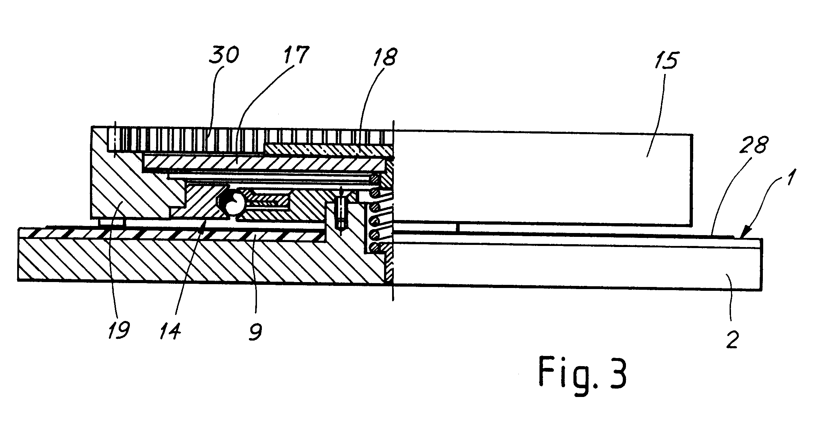

La figure 3 représente un autre mode de réalisation du moteur suivant l'invention,semblable en tous points à celui du mode de réalisation des figures 1 et 2, à part le fait que la sortie de mouvement est quelque peu différente. En effet, dans ce cas, le moteur est dépourvu d'une plaque de couverture, tandis que le rebord annulaire 23 est usiné intérieurement de façon à revêtir la forme d'une couronne à denture interne 30. Avec cette denture peut engrèner un pignon (non représenté) d'un train d'engrenage servant à transmettre le mouvement de rotation du rotor 15.

Le fonctionnement de ce moteur est le suivant.

L'élément piézo-électrique 18 étant soumis à une tension électrique par l'intermédiaire de ses deux électrodes (non visibles sur les dessins), il engendre une onde élastique cylindrique qui est transmise vers la plaque de résonance 17. Le centre de l'émission de l'onde se trouve au foyer F1 (voir figure 4) des bords elliptiques 17e de la plaque de résonance 17 et coincide donc avec l'axe X-X du moteur. L'onde élastique est réfléchie par les bords elliptiques 17e et, grâce à la forme géométrique particulière de ces bords, cette onde est concentrée sur le deuxième foyer F2 des bords elliptiques 17e, c'est-à-dire les sommets des pointes 17c de la plaque de résonance 17. Une partie de l'onde cylindrique se propage vers les bords circulaires 17d de cette plaque, où elle est réfléchie en direction du centre d'émission de l'onde, à savoir le foyer F1 des bords elliptiques 17e.

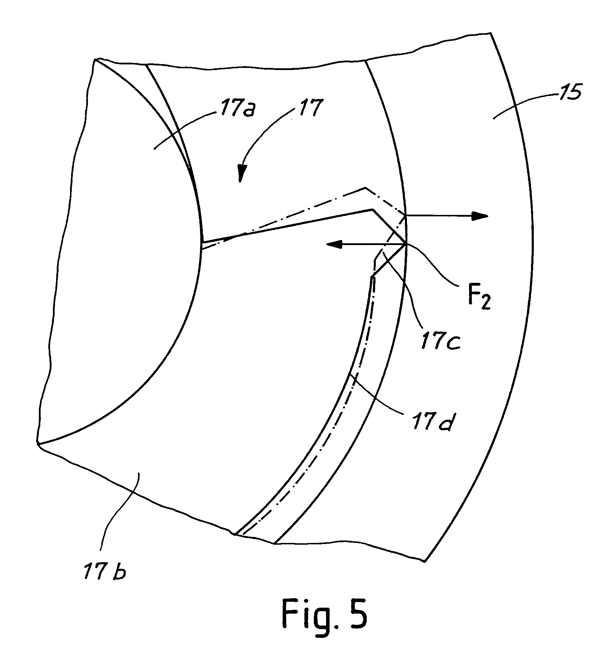

Il en résulte que les sommets des deux pointes 17c de la plaque de résonance effectuent un mouvement elliptique ce qui a pour effet l'entraînement du rotor 15. (voir la figure 5).

Dans un prototype réalisé par la Demanderesse, les dimensions suivantes ont été choisies, étant entendu que ces valeurs ne sont données ici qu'à titre d'exemple seulement:
- Diamètre extérieur du moteur 10.6 mm
- Diamètre interne du rotor 10 mm
- Diamètre du stator ( bords 17d ) 9.2 mm
- Diamètre de l'élément 18 5 mm

Par ailleurs, il est avantageux de choisir une valeur précise pour la dimension de la base des pointes 17c dont l'angle A ayant son sommet dans le point F1 est de préférence choisi à 5°. L'épaisseur de l'élément 18 est de 0.2 mm., le type de matériau céramique pouvant être le PXE 5 avec une capacité propre Co de 1.8 nF. Avec une tension électrique appliquée aux électrodes de l'élément piézo-électrique de 3 V, l'énergie fournie au système est de 3,2 mJ à une fréquence de 400 kHz.

La plaque de résonance 17 doit être réalisée en une matière dont l'impédance acoustique se rapproche le plus possible de celle de l'élément piézo-électrique 18 pourque la transmission de l'onde vibratoire soit la plus efficace possible. Par ailleurs, ce matériau doit avoir une bonne résistance à l'usure. Bien que des matériaux tels que le Durimphy, l'acier trempé ou non, le cuivrebéryllium, le laiton ou le maillechort soient utilisables, il s'est avéré que les meilleurs résultats peuvent être obtenus avec l'aluminium. Cependant, il convient de traiter la plaque fabriquée dans ce matériau de manière qu'elle présente les propriétés de résistance et éventuellement de soudabilité requises, un nickelage suivi d'une dorure de la partie centrale et un éloxage des pointes 17c étant des opérations convenant à cet effet.

Etant donnée la caractéristique non-synchrone du moteur suivant l'invention, celui-ci comporte de préférence le dispositif de détection de position représenté sur les figures 1 à 3 et décrit ci-dessus. L'avantage de ce dispositif est qu'il est simple et utilise l'alimentation même du moteur, moyennant une simple mise en forme du signal. Une électronique simple connue des spécialistes, permet au moteur de fonctionner en mode pas-à-pas à une fréquence de 1 à 60 pas par seconde, avec une résolution angulaire de 6 degrés par pas. Ainsi, le moteur suivant l'invention est particulièrement approprié pour les applications horlogères.

Pour maintenir le facteur de qualité de la plaque de résonance à une valeur convenable, celle-ci est montée, de préférence, sur un dispositif de couplage élastique ce qui est réalisé, à titre d'exemple non limitatif, par la suspension à ressort représentée sur les figures 1 à 3. Cet agencement a en outre l'avantage de compenser d'éventuelles erreurs de concentricité de la construction (roulement/stator, rotor/roulement, fixation de la plaque de résonance sur son ressort etc. ), et de favoriser ainsi le contact permanent des pointes 17c avec le rotor.

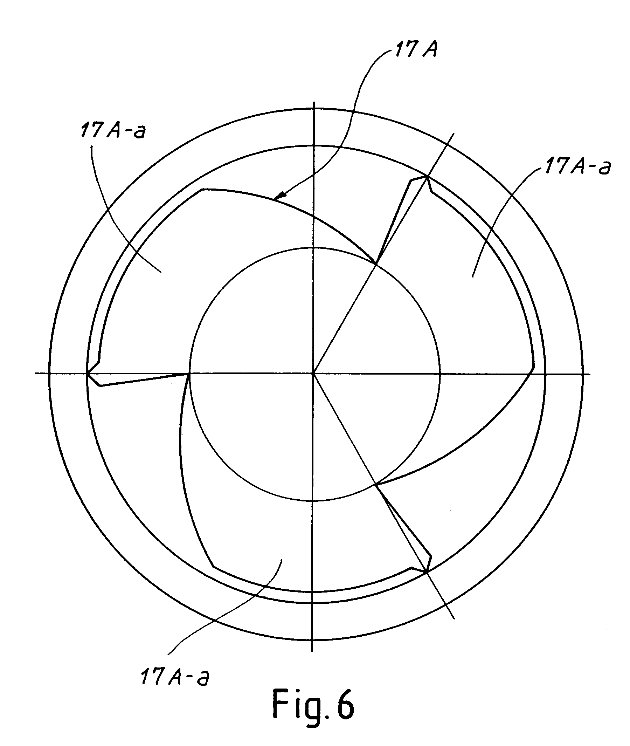

La figure 6 représente un autre mode de réalisation de l'invention qui diffère des précédents modes de réalisation uniquement en ce qu'il comporte une plaque de résonance 17A munie de trois lobes 17A-a dont les pointes actives sont écartées l'une de l'autre de 120°.

Le signal électrique qui est appliqué à l'élément piézo-électrique par l'intermédiaire de deux électrodes seulement qui sont prévues sur ses faces planes (et non représentées sur les figures), a une forme sinusoïdale à l'une des fréquences de résonance du système et peut avoir une amplitude de 3 à 15 volts par exemple. La valeur de la tension d'alimentation agit sur la vitesse du rotor et peut éventuellement être utilisée comme grandeur de réglage de cette vitesse.

Il est cependant également possible d'alimenter le moteur suivant l'invention à l'aide d'un signal de forme carrée ayant la même fréquence qu'aurait le signal sinusoïdal qu'il remplace. Un tel signal carré présente l'avantage de simplifier le circuit de commande du moteur. Ce circuit peut ainsi comprendre un pont à trois ou à quatre transistors bien connu des spécialistes.

## Revendications

1. Moteur du type piézo-électrique comprenant deux éléments (1, 17, 15) destinés à effectuer un mouvement relatif l'un par rapport à l'autre et formant respectivement un stator (1, 17) et un rotor (15), un premier (17) de ces éléments présentant une forme générale plane et comprenant des moyens (18) pour y engendrer des ondes vibratoires à fréquence ultra-sonore permettant d'imprimer à au moins un point actif (17c) de sa périphérie un mouvement elliptique dans le plan de ce premier élément (17), ledit point actif (17c) étant en prise avec une surface de transmission de mouvement (22) du second élément (15) pour, en vertu dudit mouvement elliptique, provoquer un mouvement relatif dudit second élément (15) par rapport audit premier élément (1, 17), caractérisé en ce que ledit premier élément (1, 17) comporte une partie centrale (17a) de forme générale circulaire, à l'une des faces de laquelle sont accolés lesdits moyens pour engendrer des ondes vibratoires (18), partie centrale dont s'étendent au moins deux lobes (17b) sur les bords (17d) desquels sont ménagés lesdits points actifs (17c), et en ce que les bords latéraux (17d, 17e) desdits lobes (17b) sont profilés de manière à concentrer dans lesdits points actifs (17c) l'énergie vibratoire émanant de ladite partie centrale (17a).

2. Moteur piézo-électrique suivant la revendication 1, caractérisé en ce que ledit stator comprend ledit premier élément (1, 17) et en ce que ledit rotor comprend ledit second élément (15).

3. Moteur électrique suivant la revendication 2, caractérisé en ce que ledit stator comprend une plaque de résonance (17) sur laquelle sont ménagés lesdits lobes (17b) et lesdits points actifs (17c) et en ce que lesdits moyens pour engendrer les ondes vibratoires comprennent une plaquette en une matière piézo-électrique (18) fixée sur l'une des faces de ladite plaque de résonance (17).

4. Moteur piézo-électrique suivant la revendication 3, caractérisé en ce qu'il comprend un support (2) sur lequel est fixée ladite plaque de résonance (17) par l'intermédiaire d'une liaison élastique (6).

5. Moteur piézo-électrique suivant l'une quelconque des revendications précédentes, caractérisé en ce que chacun desdits lobes (17b) présente un bord (17d) en forme d'arc de cercle centré sur l'axe (X-X) de ladite partie centrale circulaire (17a) et faisant face à ladite surface de transmission de mouvement (22) et en ce que ce bord en arc de cercle est raccordé à un bord (17e) de profil elliptique rejoignant l'autre lobe et dont un premier foyer (F1) est situé sur ledit axe (X-X), son second foyer (F2) coincidant avec ledit point actif appartenant à ce lobe (17b).

6. Moteur piézo-électrique suivant l'une quelconque des revendications 2 à 5, caractérisé en ce que ledit rotor (15) comprend une bague annulaire (19) sur laquelle est ménagée intérieurement ladite surface de transmission de mouvement (22) et en ce que ladite bague est fermée par une plaque circulaire (24) dans lequel est chassé un pignon (27) de prise de mouvement formant la sortie du moteur.

7. Moteur piézo-électrique suivant l'une quelconque des revendications 2 à 5, caractérisé en ce que ledit rotor (15) comprend .une bague annulaire (19) sur laquelle est ménagée intérieurement ladite surface de transmission de mouvement (22) et en ce que cette bague comprend également une couronne dentée (30) destinée à engrèner avec un organe d'entraînement extérieur au moteur, ladite couronne formant la sortie du moteur.

## Patentansprüche

1. Piezoelektrischer Motor, umfassend zwei Elemente (1, 17, 15), dazu bestimmt, eine Bewegung relativ zueinander auszuführen, und einen Stator (1, 17) bzw. einen Rotor (15) bildend, wobei ein erstes (17) dieser Elemente eine generell ebene Form aufweist und Mittel (18) umfaßt, um in ihm Vibrationswellen mit Ultraschallfrequenz zu erzeugen, die es ermöglichen, an mindestens einem aktiven Punkt (17c) seiner Peripherie eine elliptische Bewegung in der Ebene dieses ersten Elementes (17) zu erzwingen, welcher aktive Punkt (17c) im Eingriff steht mit einer Bewegungsübertragungsoberfläche (22) des zweiten Elementes (15), um dank dieser elliptischen Bewegung eine Relativbewegung des zweiten Elementes (15) relativ zum ersten Element (1, 17) hervorzurufen, dadurch gekennzeichnet, daß das erste Element (1, 17) eine zentrale Partie (17a) generell runder Form aufweist, daß an einer seiner Seiten die Mittel zum Erzeugen der Vibrationswellen (18) angeordnet sind, von welcher zentralen Partie sich mindestens zwei Fortsätze (17b) erstrecken, an deren Rändern (17d) die aktiven Punkte (17c) ausgebildet sind, und daß die seitlichen Ränder (17d, 17e) der Fortsätze (17b) derart profiliert sind, daß die Vibrationsenergie, die von der zentralen Partie (17a) herrührt, in den aktiven Punkten (17c) konzentriert wird.

2. Piezoelektrischer Motor nach Anspruch 1, dadurch gekennzeichnet, daß der Stator das erste Element (1, 17) umfaßt und daß der Rotor das zweite Element (15) umfaßt.

3. Elektrischer Motor nach Anspruch 2, dadurch gekennzeichnet, daß der Stator eine Resonanzplatte (17) umfaßt, auf der die Fortsätze (17b) und die aktiven Punkte (17c) angeordnet sind, und daß die Mittel zum Erzeugen der Vibrationswellen eine Platte aus einem piezoelektrischen Material (18) umfassen, befestigt auf einer der Seiten der Resonanzplatte (17).

4. Piezoelektrischer Motor nach Anspruch 3, dadurch gekennzeichnet, daß er einen Support (2) umfaßt, auf dem die Resonanzplatte (17) über eine elastische Verbindung (6) befestigt ist.

5. Piezoelektrischer Motor nach einem der vorangehenden Ansprüche, dadurch gekennzeichnet, daß jeder der Forsätze (17b) einen Rand (17d) in Kreisbogenform, zentriert auf die Achse (X-X) der zentralen runden Partie (17a) und gegenüber der Bewegungsübertragungsoberfläche (22) aufweist, und daß dieser kreisbogenförmige Rand verbunden ist mit einem Rand (17e) elliptischen Profils, der auf den anderen Fortsatz trifft und von dem ein erster Brennpunkt (F1) sich in der Achse (X-X) befindet, während sein zweiter Brennpunkt (F2) mit dem aktiven Punkt, der zu diesem Fortsatz (17b) gehört, zusammenfällt.

6. Piezoelektrischer Motor nach einem der Ansprüche 2 bis 5, dadurch gekennzeichnet, daß der Rotor (15) einen Kreisring (19) umfaßt, auf dessen Inneren die Bewegungsübertragungsoberfläche (22) ausgebildet ist, und daß der Ring durch eine kreisrunde Platte (24) abgeschlossen ist, in die ein Ritzel (27) für den Bewegungseingriff eingetrieben ist, das den Abtrieb des Motors bildet.

7. Piezoelektrischer Motor nach einem der Ansprüche 2 bis 5, dadurch gekennzeichnet, daß der Rotor (15) einen Kreisring (19) umfaßt, auf dessen Inneren die Bewegungsübertragungsoberfläche (22) ausgebildet ist, und daß dieser Ring außerdem eine verzahnte Krone (30) umfaßt, dazu bestimmt, in Eingriff mit einem äußeren Antriebsorgan des Motors zu gelangen, welche Krone den Abtrieb des Motors bildet.

## Claims

1. Motor of the piezoelectric type comprising two elements (1, 17, 15) intended to effect relative movement with respect to each other and forming respectively a stator (1, 17) and a rotor (15), a first (17) of such elements exhibiting a generally planar form and comprising means (18) for generating vibratory waves therein at an ultrasonic frequency enabling the imparting of an elliptic motion to at least one active point (17c) on its periphery in the plane of such first element (17), said active point (17c) being in engagement with a motion transmission surface (22) of said second element (15) in order to bring about movement of said second element (15) relative to said first element (1, 17) by virtue of said elliptic motion, characterized in that said first element (1, 17) includes a central portion (17a) of generally circular form to one of the faces to one of the faces of which are attached said means for generating vibratory waves (18), from which central portion extend at least two lobes (17b) on the edges (17d) of which are arranged said active points (17c), and in that the lateral edges (17d, 17e) of said lobes (17b) are profiled so as to concentrate the vibratory energy from said central portion (17a) within said active points (17c).

2. Piezo-electric motor according to claim 1, characterized in that said stator comprises said first element (1, 17) and in that said rotor comprises said second element (15).

3. Piezo-electric motor according to claim 2, characterized in that said stator comprises a resonance plate (17) on which said lobes (17b) and said active points (17c) are arranged and in that said means for generating the vibratory waves comprise a platelet of piezo-electric material (18) fastened to one of the faces of said resonance plate (17).

4. Piezo-electric motor according to claim 3, characterized in that it comprises a support (2) to which said resonance plate (17) is fastened through an elastic coupling (6).

5. Piezo-electric motor according to any one of the preceding claims, characterized in that each of said lobes (17b) exhibits an edge (17d) in the form of an arc of a circle centered on the axis (X-X) of said central circular portion (17a) and facing said motion transmission surface (22) and in that such circular arc-formed edge is linked with an elliptically profiled edge (17e) rejoining the other lobe, a first focus (F1) of which is situated on said axis (X-X), its second focus (F2) coinciding with said active point belonging to such lobe (17b).

6. Piezo-electric motor according to any one of claims 2 to 5, characterized in that said rotor (15) comprises an annular ring (19) on which is interiorly provided said motion transmission surface (22) and in that said ring is closed by a circular plate (24) into which is driven a pinion (27) for taking off the movement and forming the motor output.

7. Piezo-electric motor according to any one of claims 2 to 5, characterized in that said rotor (15) comprises an annular ring (19) on which is interiorly provided said motion transmission surface (22) and in that said ring also comprises a toothed crown (30) intended to mesh with a driving element exterior to the motor, said crown forming the motor output.
